# EUROPEAN PATENT APPLICATION

(11) **EP 4 811 627 A1**
(43) Date of publication of application: **23.09.2026**
(21) Application number: 24891522.5
(22) Date of filing: 15.11.2024
(51) Int. Cl.: H02K 15/02

(54) **DEVICE FOR MANUFACTURING LAMINATED CORE AND METHOD FOR MANUFACTURING LAMINATED CORE**

(30) Priority: 16.11.2023 JP 2023195401
(71) Applicant: Nippon Steel Corporation, Tokyo 100-8071 (JP)
(72) Inventor: TAKEDA, Kazutoshi, Tokyo 100-8071 (JP); FUKUCHI, Minako, Tokyo 100-8071 (JP); KATAOKA, Takashi, Tokyo 100-8071 (JP); IWASE, Yoshiaki, Tokyo 105-8419 (JP); ARAI, Mikako, Tokyo 105-8419 (JP)
(74) Representative: Vossius & Partner Patentanwälte Rechtsanwälte mbB
(86) International application number: PCT/JP2024/040710
(87) International publication number: WO 2025/105487

(57) **Abstract**

A laminated core manufacturing apparatus, includes: an upper mold and a lower mold that press and punch out a core sheet from a strip-shaped steel sheet that is fed downstream; a lamination part that is provided at the lower mold and that bonds with an adhesive, and laminates, the punched-out core sheet; and an application part that is provided further toward an upstream side of the lower mold or the upper mold than the lamination part in a feeding direction of the strip-shaped steel sheet, and that applies the adhesive to one surface of the strip-shaped steel sheet, in which the application part has plural discharge ports that continuously discharge the adhesive, and the respective discharge ports are configured by a non-metallic material.

## Description

### Technical Field

The present disclosure relates to a laminated core manufacturing apparatus and a method of manufacturing a laminated core.

### Background Art

A method of manufacturing a laminated core is known that involves pressing a strip-shaped steel sheet, punching out core sheets, and then bonding together the punched-out core sheets with an adhesive (for example, see Japanese Patent Application Laid-open No. 2017-216873, Japanese Patent No. 5375264, Japanese Patent No. 6515241, and Japanese Patent No. 7138899).

### Summary of the Invention

### Technical Problem

Incidentally, anaerobic adhesives are used to bond together punched core sheets. An anaerobic adhesive exhibits a strong curing reaction with metals, and the curing reaction progresses steadily even in a state in which curing accelerators or the like are not added. For this reason, in a case of using a metal nozzle for the application of an anaerobic adhesive, the anaerobic adhesive is susceptible to hardening within the nozzle. In a case in which an anaerobic adhesive hardens, the fluidity of the anaerobic adhesive decreases, and clogging of the nozzle may occur. For this reason, it is difficult to apply an appropriate amount of anaerobic adhesive to a strip-shaped steel sheet from which the core sheets are punched.

The present disclosure aims to provide a technique that enables the application of an appropriate amount of adhesive to a strip-shaped steel sheet.

### Solution to Problem

A laminated core manufacturing apparatus of one aspect of the present disclosure includes: an upper mold and a lower mold that press and punch out a core sheet from a strip-shaped steel sheet that is fed downstream; a lamination part that is provided at the lower mold and that bonds with an adhesive, and laminates, the punched-out core sheet; and an application part that is provided further toward an upstream side of the lower mold or the upper mold than the lamination part in a feeding direction of the strip-shaped steel sheet, and that applies the adhesive to one surface of the strip-shaped steel sheet, in which the application part has plural discharge ports that continuously discharge the adhesive, and portions configuring the respective discharge ports are configured by a non-metallic material.

A method of manufacturing a laminated core of another aspect of the present disclosure includes: feeding a strip-shaped steel sheet toward an upper mold and a lower mold that press the strip-shaped steel sheet and punch out a core sheet; continuously discharging an adhesive from a plurality of discharge ports that are configured by a non-metallic material and that are included in an application part provided at the lower mold or the upper mold, and applying the adhesive to one surface of the strip-shaped steel sheet and laminating the core sheet, which has been punched out from the strip-shaped steel sheet by pressing by the upper mold and the lower mold, while bonding the core sheet with the adhesive.

### Advantageous Effects of Invention

According to the present disclosure, it is possible to apply an appropriate amount of adhesive to a strip-shaped steel sheet.

### BRIEF DESCRIPTION OF DRAWINGS

Fig. 1 is a perspective view of a laminated core manufactured by the manufacturing apparatus of the embodiment.
Fig. 2 is a schematic lateral view of the manufacturing apparatus of the embodiment.
Fig. 3 is a plan view of an application head.
Fig. 4 is a lateral view of the application head.
Fig. 5 is a cross-sectional view of the application head.
Fig. 6A is an enlarged view of the portion indicated by the arrow 6X in Fig. 5.
Fig. 6B is an enlarged view showing a state of applying adhesive to a strip-shaped steel sheet (an enlarged view corresponding to Fig. 6A).
Fig. 7A is an enlarged view of the surroundings of the discharge port of an application head of another embodiment (a cross-sectional view corresponding to Fig. 6A).
Fig. 7B is an enlarged view showing a state of applying adhesive to a strip-shaped steel sheet (an enlarged view corresponding to Fig. 7A).
Fig. 8 is an enlarged view of the surroundings of the discharge port of an application head of another embodiment (a cross-sectional view corresponding to Fig. 6A).

### DESCRIPTION OF EMBODIMENTS

In the following, an embodiment for implementing the technique of the present disclosure is explained based on the drawings. Components designated with the same reference numerals in the various drawings are meant to be the same or similar components. In the embodiment explained below, duplicated explanation and reference numerals may be omitted. Further, the drawings used in the following explanation are all schematic, and the dimensional relationships between respective elements, proportions of respective elements, and the like shown in the drawings do not necessarily correspond to the actual features. Further, the dimensional relationships between respective elements, proportions of respective elements and the like are not necessarily consistent between the respective drawings.

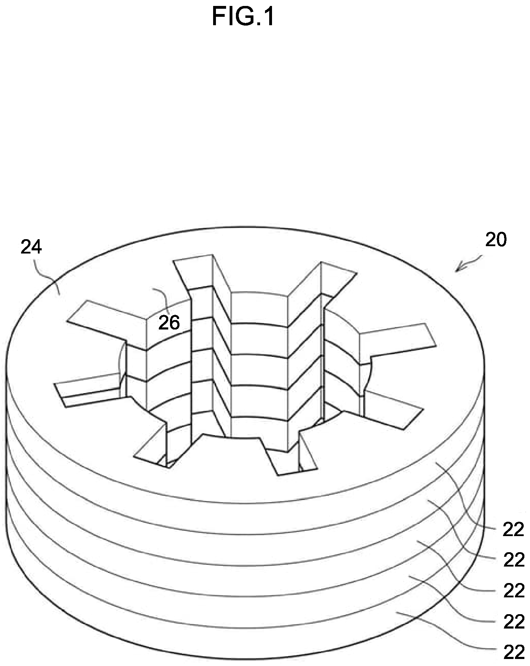

First, the laminated core manufacturing apparatus of the present embodiment is explained, and then the method of manufacturing a laminated core of the present embodiment is explained. A laminated core 20 manufactured using the manufacturing apparatus and manufacturing method of the present embodiment can be used, for example, in stators, rotor cores, and the like configuring a rotating electric machine. This rotating electric machine is, for example, an electric motor. The electric motor can be an AC motor, a synchronous motor, or a permanent magnet field motor. These types of electric motor are favorable for use in electric vehicles, for example. Here, in the present embodiment, the laminated core 20 is explained as an adhesive lamination core for a stator as shown in Fig. 1. This laminated core 20 has an annular core back part 24 and plural tooth parts 26 that project toward a radial direction inner side from the core back part 24.

### [Laminated core manufacturing apparatus 30]

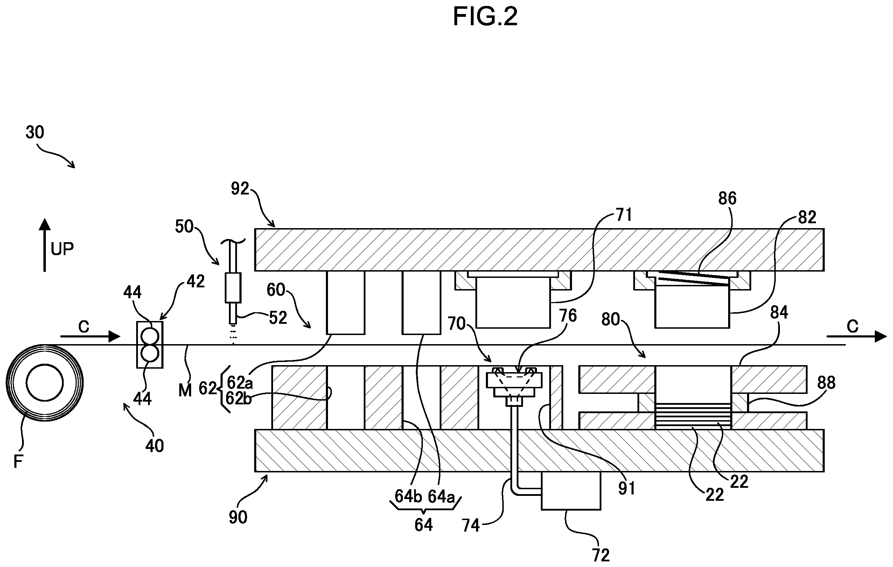

As shown in Fig. 2, a laminated core manufacturing apparatus 30 of the present embodiment (hereinafter abbreviated as "manufacturing apparatus 30") is an apparatus that presses a strip-shaped steel sheet M, punches out core sheets 22, bonds the punched-out core sheets 22 together with an adhesive and laminates them to manufacture the laminated core 20. Note that the arrow UP in Fig. 2 points upwards.

The manufacturing apparatus 30 is provided with a feeder 40, an oil application part 50, a pressing part 60, an adhesive application part 70, and a lamination part 80. Further, the manufacturing apparatus 30 is provided with a fixed mold 90 and a movable mold 92. The fixed mold 90 is located at a lower side in the vertical direction and is, therefore, also referred to as the lower mold. The movable mold 92 is located at an upper side in the vertical direction and is, therefore, also referred to as the upper mold. The movable mold 92 moves relative to the fixed mold 90 in the vertical direction by means of a drive mechanism (not shown).

The feeder 40 is the portion of the manufacturing apparatus 30 that feeds out the strip-shaped steel sheet M that will be the material for the core sheets 22. Specifically, the feeder 40 unwinds and feeds out the strip-shaped steel sheet M from a wound hoop material F. More specifically, the feeder 40 includes a hoop feeding device 42. The strip-shaped steel sheet M is unwound and fed out from the hoop material F by this hoop feeding device 42. The hoop feeding device 42 is provided, for example, with a pair of clamping rolls 44. The strip-shaped steel sheet M is fed out while being gripped from both sides by the pair of clamping rolls 44. Further, the strip-shaped steel sheet M is fed from the feeder 40 to the oil application part 50, the pressing part 60, the adhesive application part 70, and the lamination part 80. The direction in which this strip-shaped steel sheet M is fed out is called the feeding direction, and is indicated by the symbol C in the drawing. Here, in the following, "downstream" and "downstream side" refer to downstream and the downstream side in the feeding direction of the strip-shaped steel sheet M. Further, when reference is made to "upstream" or an "upstream side", this indicates upstream or the upstream side in the feeding direction of the strip-shaped steel sheet M.

The strip-shaped steel sheet M is, for example, an electromagnetic steel sheet. As the electromagnetic steel sheet, a known electromagnetic steel sheet may be used. For example, a non-oriented electromagnetic steel sheet may be used, or a non-oriented electromagnetic steel sheet may be used, as the electromagnetic steel sheet. As the non-oriented electromagnetic steel sheet, the non-oriented electrical steel strip of JIS C2552:2014 may be used. As the grain-oriented electromagnetic steel sheet, the grain-oriented electrical steel strip of JIS C2553:2012 may be used. Further, both sides of the strip-shaped steel sheet M may be covered with an insulation coating.

The oil application part 50 is the portion of the manufacturing apparatus 30 that applies oil to the strip-shaped steel sheet M that will be the material for the core sheets 22. The oil application part 50 is provided, for example, with plural nozzles 52 that apply oil by spraying the oil toward one surface of the strip-shaped steel sheet M. Oil is supplied to each nozzle 52 from an oil supply source (not shown). Here, in the oil application part 50 of the present embodiment, processing oil for pressing is applied to the strip-shaped steel sheet M. Further, in the present embodiment, each nozzle 52 applies the oil in a downward orientation. Therefore, oil is applied to the upper surface of the strip-shaped steel sheet M. Furthermore, the oil is applied across the entire width of the strip-shaped steel sheet M.

The pressing part 60 is the portion of the manufacturing apparatus 30 that performs punch processing on the strip-shaped steel sheet M. This pressing part 60 is provided with a first-stage punching part 62 and a second-stage punching part 64.

The first-stage punching part 62 is located downstream of the oil application part 50 and has a male die 62a and a female die 62b.

The male die 62a and the female die 62b are arranged coaxially along the vertical direction. The strip-shaped steel sheet M passes between the male die 62a and the female die 62b. That is, at a time of manufacturing of the laminated core 20, the male die 62a faces the upper surface of the strip-shaped steel sheet M, and the female die 62b faces the lower surface of the strip-shaped steel sheet M.

Here, in the present embodiment, the female die 62b is fixed to the upper surface of the fixed mold 90, and the male die 62a is fixed to the lower surface of the movable mold 92. Therefore, as the movable mold 92 moves vertically relative to the fixed mold 90, the male die 62a enters into the female die 62b.

By moving the male die 62a downwards to enter into the female die 62b in a state in which feeding of the strip-shaped steel sheet M is paused, a first punching process required to form a core sheet 22 is performed on the strip-shaped steel sheet M. At this time, since oil is applied to the upper surface of the strip-shaped steel sheet M, punching can be performed without the occurrence of seizing or the like. After this punching process, the male die 62a is moved upward and withdrawn from the female die 62b, and the strip-shaped steel sheet M is fed downstream.

The second-stage punching part 64 is arranged downstream of the first-stage punching part 62 and has a male die 64a and a female die 64b.

Here, in the present embodiment, the female die 64b is fixed to the upper surface of the fixed mold 90, and the male die 64a is fixed to the lower surface of the movable mold 92. Therefore, as the movable mold 92 moves vertically relative to the fixed mold 90, the male die 64a enters into the female die 64b.

The male die 64a and the female die 64b are arranged coaxially along the vertical direction. After completion of the first punching process, the strip-shaped steel sheet M passes between the male die 64a and the female die 64b. That is, the male die 64a faces the upper surface of the strip-shaped steel sheet M, and the female die 64b faces the lower surface of the strip-shaped steel sheet M.

By moving the male die 64a downwards by a hydraulic mechanism (not shown) to enter into the female die 64b in a state in which feeding of the strip-shaped steel sheet M is paused once more, a second punching process required to form a core sheet 22 is performed on the strip-shaped steel sheet M. At this time, since oil is applied to the upper surface of the strip-shaped steel sheet M, punching can be performed without the occurrence of seizing or the like. After this punching process, the male die 64a is moved upward and withdrawn from the female die 64b, and the strip-shaped steel sheet M is fed downstream.

Plural stator tooth parts 26 are formed at the strip-shaped steel sheet M by the first-stage punching part 62 and the second-stage punching part 64. Here, the plural tooth parts 26 are portions at which windings configuring the stator are formed as concentrated windings or distributed windings.

The adhesive application part 70 is a portion of the manufacturing apparatus 30 that has the function of applying an adhesive to one surface of the strip-shaped steel sheet M. The adhesive application part 70 is provided with an adhesive supply device 72, a supply channel 74, an application head 76, and a steel sheet holder 71.

The adhesive supply device 72 is a device that supplies adhesive from an adhesive container (not shown) that stores adhesive, to the application head 76. For example, an anaerobic adhesive is used as the adhesive that bonds together the core sheets 22. As an anaerobic adhesive, for example, "ARONTITE" (registered trademark) manufactured by Toagosei Co., Ltd. may be used. Further, the adhesive supply device 72 may be attached to the fixed mold 90, or it may be installed in a separate location from the fixed mold 90. Similarly, the adhesive container may be attached to the fixed mold 90, or it may be installed in a separate location from the fixed mold 90.

The supply channel 74 is a flow path for supplying adhesive from the adhesive container to the application head 76. The supply channel 74 is configured, for example, by a non-metallic material. Specifically, the supply channel 74 is a pipe configured by a resin material; that is, a resin pipe.

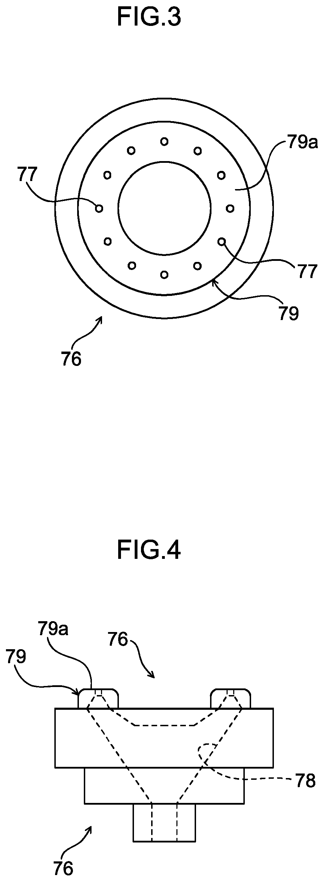

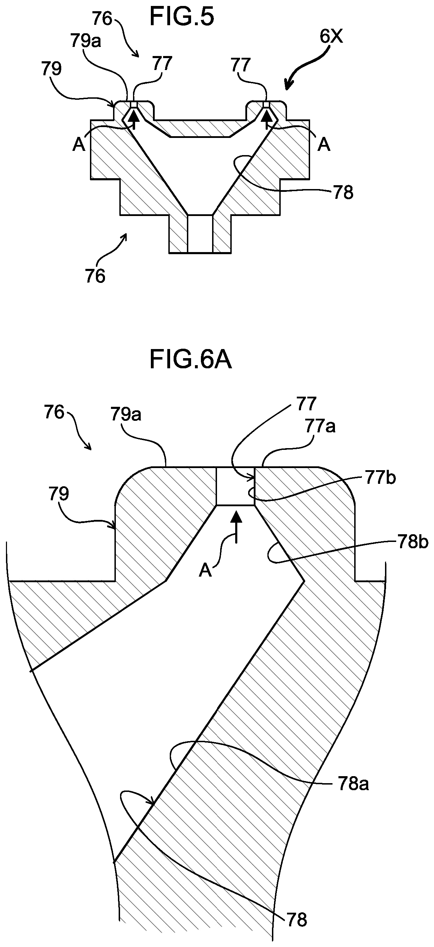

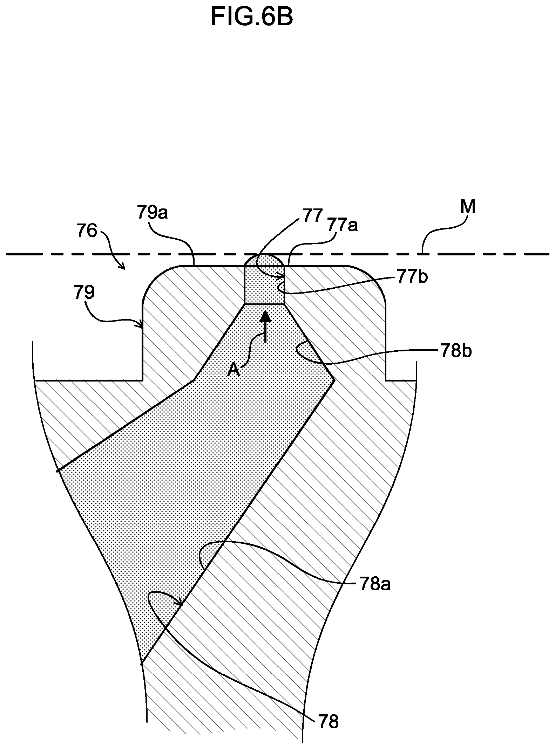

The application head 76 is attached to the leading end of the supply channel 74 and is the portion that applies the adhesive to one surface of the strip-shaped steel sheet M. The application head 76 is housed in a recessed housing part 91 provided on the upper surface of the fixed mold 90. Here, the application head 76 of the present embodiment is an example of an application part in the present disclosure. Further, in Figs. 3 to 6A and 6B, the arrow A indicates the flow of the adhesive.

As shown in Fig. 3, the application head 76 has plural discharge ports 77 for discharging adhesive. The adhesive supply device 72 is configured to be able to continuously discharge adhesive from the plural discharge ports 77. Therefore, adhesive is continuously discharged from the plural discharge ports 77. Furthermore, as used herein, "adhesive is continuously discharged from the discharge ports 77" includes continuously discharging adhesive from the discharge ports 77 onto the strip-shaped steel sheet M from an adhesive application position to at least a next adhesive application position by means of the adhesive supply device 72.

Further, as shown in Fig. 4, each discharge port 77 faces upward. That is, each discharge port 77 faces the lower surface of the strip-shaped steel sheet M at a time of manufacturing the laminated core 20. In the present embodiment, in a state in which adhesive is protruding from the discharge port 77 (in other words, a state in which the adhesive is exiting from the discharge port 77 upwards) as shown in Fig. 6B, the discharge port 77 and the strip-shaped steel sheet M are brought close to each other such that a gap remains between the discharge port 77 and the strip-shaped steel sheet M, and adhesive is applied to the lower surface of the strip-shaped steel sheet M.

In the application head 76, portions configuring the respective discharge ports 77 are configured by non-metallic material. Further, portions configuring the discharge ports 77 of the application head 76 include an inner wall surface 77a configuring the discharge port 77 and a peripheral part 77b of the discharge port 77.

Further, as shown in Fig. 4, the application head 76 has a storage part 78 for storing adhesive supplied from an external source. Specifically, the resin pipe configuring the supply channel 74 is connected to a connection port of the application head 76, and the supply channel 74 is communicated with the storage part 78. The storage part 78 is communicated with each discharge port 77. Therefore, the adhesive sent through the supply channel 74 is discharged from each discharge port 77 via the storage part 78. Further, in the application head 76, portions configuring the storage part 78 are configured by non-metallic material.

Here, the portions configuring the storage part 78 in the application head 76 include an inner wall surface 78a configuring the storage part 78 and an inner wall surface 78b of a flow path portion connecting the storage part 78 and the discharge port 77.

Further, since the storage part 78 is a portion that stores the adhesive, a portion that is narrower in diameter than the discharge port 77 is not formed in the storage part.

The application head 76 of the present embodiment has an annular protrusion 79 on its surface (the top surface in Fig. 4) that protrudes from the surface. This protrusion 79 has, for example, an annular shape. The top part of this protrusion 79 is a flat surface that is flat in the circumferential direction (hereinafter, referred to as "top surface 79a" as appropriate). The plural discharge ports 77 are formed on the top surface 79a of the protrusion 79, spaced apart in the circumferential direction of the protrusion 79. Here, in the present embodiment, since the top part of the protrusion 79 is a flat surface, plural discharge ports 77 are formed on the flat surface; however, in a case in which the top part of the protrusion 79 is a curved surface that curves in an arc shape as viewed in cross-section, the discharge port 77 is formed at the apex of the curved surface.

Further, in the present embodiment, the entire application head 76 is configured by a non-metallic material.

The non-metallic material configuring the application head 76 is, for example, a resin material. Specifically, it is an organic resin material. Further, in the present disclosure, the punching process is performed continuously. Therefore, the application head 76 is required to have sufficient heat resistance to avoid deformation at 120°C in order to obtain adequate mechanical strength. As such resin materials, it is preferable to use polyacetal resin, polyethylene resin, polypropylene resin, polyether ether ketone resin, or polytetrafluoroethylene resin.

The steel sheet holder 71 is disposed above the application head 76. At a time of manufacturing the laminated core 20, the steel sheet holder 71 faces the upper surface of the strip-shaped steel sheet M. That is, the steel sheet holder 71 is provided at the lower surface of the movable mold 92. The steel sheet holder 71 is pushed downward by a hydraulic mechanism (not shown) in a state in which the feeding of the strip-shaped steel sheet M is paused, thereby pushing the strip-shaped steel sheet M downward. By this, the steel sheet holder 71 can push down and position the height of the strip-shaped steel sheet M at the position at which the adhesive is applied by the application head 76. In this positioning state, the lower surface of the strip-shaped steel sheet M is in close proximity to the respective discharge ports 77 of the application head 76.

Further, in the positioning state due to the steel sheet holder 71, when the adhesive supply device 72 is activated and supplies an appropriate amount of air to the adhesive container, the adhesive in the adhesive container is sent to the application head 76. As a result, an appropriate amount of adhesive is discharged from each discharge port 77 of the application head 76 and applied to the lower surface of the strip-shaped steel sheet M. Subsequently, the height position of the strip-shaped steel sheet M is returned to its original height by raising the steel sheet holder 71.

The lamination part 80 is a portion of the manufacturing apparatus 30 at which punched-out core sheets 22 are laminated while being bonded together with an adhesive. This is arranged downstream of the adhesive application part 70. The lamination part 80 is provided with an outer periphery punching male die 82, an outer periphery punching female die 84, a spring 86, and a heater 88.

The outer periphery punching male die 82 is a cylindrical die having a circular base, and the lower end of the spring 86 is connected to the upper end thereof. Further, the outer periphery punching male die 82 is able to move vertically together with the spring 86 in a state in which it is supported by the spring 86. The outer periphery punching male die 82 has an outer diameter that is substantially the same as the outer diameter of the laminated core 20.

The outer periphery punching female die 84 is a die having a cylindrical internal space, and has an internal diameter that is substantially the same as the outer diameter of the laminated core 20.

The heater 88 is integrally incorporated into the outer periphery punching female die 84. The heater 88 heats the core sheets 22, which are stacked inside the outer periphery punching male die 84, from the surroundings thereof. In a case of using a heat-curing type adhesive, the adhesive hardens upon receipt of heat from the heater 88. Further, in a case of using a room-temperature curing adhesive, the adhesive hardens at room temperature without requiring heating. Further, in a case of using a room-temperature curing type adhesive, the heater 88 may be omitted.

According to the lamination part 80, in a state in which the feeding of the strip-shaped steel sheet M is paused, the outer periphery punching male die 82 is lowered to sandwich the strip-shaped steel sheet M between itself and the outer periphery punching female die 84. Further, by pushing the outer periphery punching male die 82 into the outer periphery punching female die 84, core sheets 22 with their outer periphery punched out are obtained from the strip-shaped steel sheet M.

The core sheets 22 punched out from the strip-shaped steel sheet M are laminated onto the upper surface of other core sheets 22 that have been punched out previously and laminated and bonded inside the outer periphery punching female die 84. Further, pressure from the outer periphery punching male die 82 and heat from the heater 88 are applied. At this time, the pressure applied to the core sheet 22 from the outer periphery punching male die 82 is maintained at a constant level by the biasing force of the spring 86. Furthermore, the spring 86 may be omitted by appropriately setting the height position of the male die 82.

As a result, the core sheet 22 currently punched out is bonded to the upper surface of the core sheet 22 previously punched out. By repeating these respective processes of periphery punching, pressurizing, and heating a number of times equal to the number of layers of the respective core sheets 22, a laminated core 20 is formed inside the outer periphery punching female die 84. A fixed laminated core 20 is transferred to the lower side of the mold through a through-hole (not shown in Fig. 2) formed in the fixed mold 90 and ejected from the mold.

As shown in Fig. 2, the female die 64b, the female die 64b, the application head 76, the outer periphery punching female die 84, and the heater 88 are fixed on the fixed mold 90.

The male die 64a, the male die 64a, the steel sheet holder 71, and the outer periphery punching male die 82 are fixed to the lower surface of the movable mold 92.

When the strip-shaped steel sheet M is fed toward the downstream side and paused, the movable mold 92 is brought closer to the fixed mold 90-that is, lowered-whereby punching out of the outer periphery of the core sheet 22, lamination and bonding, applying adhesive to the position of the core sheet 22 that will next have its outer periphery punched out at the strip-shaped steel sheet M, the second punching process at the position at which the adhesive will be applied next at the strip-shaped steel sheet M, and the first punching process at the position at which the second punching operation will be performed next at the strip-shaped steel sheet M, are performed simultaneously.

Next, the movable mold 92 is raised and stowed above the strip-shaped steel sheet M, after which the strip-shaped steel sheet M is fed only a predetermined distance toward the downstream side again and then paused again. In this state, the movable mold 92 is lowered, and processing continues at each position. In this way, the laminated core 20 is manufactured by repeatedly feeding the strip-shaped steel sheet M intermittently and moving the movable mold 92 up and down during pauses.

Explanation follows regarding the mechanism and effects of the present exemplary embodiment.

In cases in which members that configure a channel for anaerobic adhesive to flow in (for example, pipes, mold channels, and the like) are formed from metal materials, the anaerobic adhesive reacts with the metal, and a curing reaction progresses steadily even in a state in which curing accelerators or the like are not added. As the curing reaction of an anaerobic adhesive progresses, its fluidity decreases. In particular, in narrow channels, pipes, and bends in channels, even a slight decrease in fluidity can cause clogging. For example, in a case of applying an anaerobic adhesive to a strip-shaped steel sheet M using a needle-shaped metal nozzle, the anaerobic adhesive is susceptible to solidifying within the metal nozzle. In this way, the curing reaction of the anaerobic adhesive can proceed easily inside the metal nozzle, causing a change in viscosity, as a result of which it becomes difficult to apply the correct amount of adhesive to the strip-shaped steel sheet M as time passes. In cases of punching out core sheets 22 at punching speeds of 100 spm or more in particular, since the anaerobic adhesive, having undergone a curing reaction, has reduced fluidity, it becomes more difficult to apply the appropriate amount of adhesive to the strip-shaped steel sheet M. In contrast, in the manufacturing apparatus 30 of the present embodiment, the portion configuring the discharge port 77 of the application head 76 is configured by a non-metallic material. In the present embodiment, the discharge port 77, which projects the adhesive, is the portion having the narrowest diameter in the flow path of the adhesive. By configuring the portion configuring these discharge ports 77 from a non-metallic material, it becomes possible to suppress the progression of a curing reaction of the adhesive inside the discharge port 77. Further, in the application head 76, the storage part 78 that delivers adhesive to the discharge port 77 also has the parts that configure the storage part 78 configured by non-metallic material. Therefore, it is possible to suppress the progress of a curing reaction of the adhesive inside the storage part 78. Furthermore, since the components configuring the supply channel 74 are also configured by non-metallic materials, it is possible to suppress the progress of the curing reaction of the adhesive within the supply channel 74. By configuring the portions that configure the flow path of the adhesive with non-metallic materials in this way, the progression of a curing reaction of the adhesive can be suppressed, and it becomes possible to apply the appropriate amount of adhesive to the strip-shaped steel sheet M. Further, since the progression of a curing reaction of the adhesive can be suppressed, even in cases of punching out core sheets 22 at punching speeds of 100 spm or more, it becomes possible to apply the appropriate amount of adhesive to the strip-shaped steel sheet M. Furthermore, since the progression of a curing reaction of the adhesive can be suppressed, maintenance of the application head 76 in response to clogging will not be required for a long period of time. Therefore, maintainability is improved.

Further, in the manufacturing apparatus 30, in a state in which the adhesive is protruding from the discharge port 77 as shown in Fig. 6B, the discharge port 77 and the strip-shaped steel sheet M are brought close to each other such that a gap remains between the discharge port 77 and the strip-shaped steel sheet M, and adhesive is applied to the lower surface of the strip steel plate. Here, in a case in which the discharge port 77 is contacted against the strip-shaped steel sheet M and the adhesive is applied, there is a risk that the curing reaction of the anaerobic adhesive contacting the strip-shaped steel sheet M will be accelerated. In contrast, in the manufacturing apparatus 30, since a gap remains between the discharge port 77 and the strip-shaped steel sheet M when the adhesive is applied, the curing reaction of the anaerobic adhesive is less likely to be accelerated, and clogging of the discharge port 77 can be suppressed.

Further, in the manufacturing apparatus 30, the entire application head 76 is configured by a non-metallic material. For this reason, compared to a case in which a part of the application head 76 is made of a metal material, it becomes possible to reliably suppress the progression of the adhesive curing reaction.

Further, in the manufacturing apparatus 30, adhesive is supplied to each discharge port 77 via the storage part 78. For this reason, the flow path length from the storage part 78 to each discharge port 77 becomes substantially constant, and it becomes possible to discharge an appropriate amount of adhesive from each discharge port.

Further, in the manufacturing apparatus 30, the non-metallic material is a resin material. Because the resin material has excellent moldability, the molding of the application head 76 and the supply channel 74 is facilitated. Further, the application head 76 and the supply channel 74 can be made lighter.

Further, in the manufacturing apparatus 30, the resin material is polyacetal resin, polyethylene resin, polypropylene resin, polyether ether ketone resin, or polytetrafluoroethylene resin. These resin materials have excellent strength, chemical resistance, and other properties. For this reason, the durability of components using these resin materials is improved.

### (Other Embodiments)

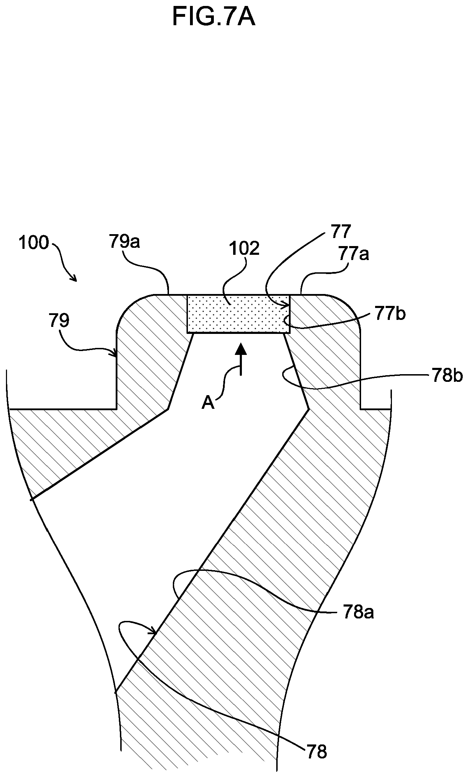

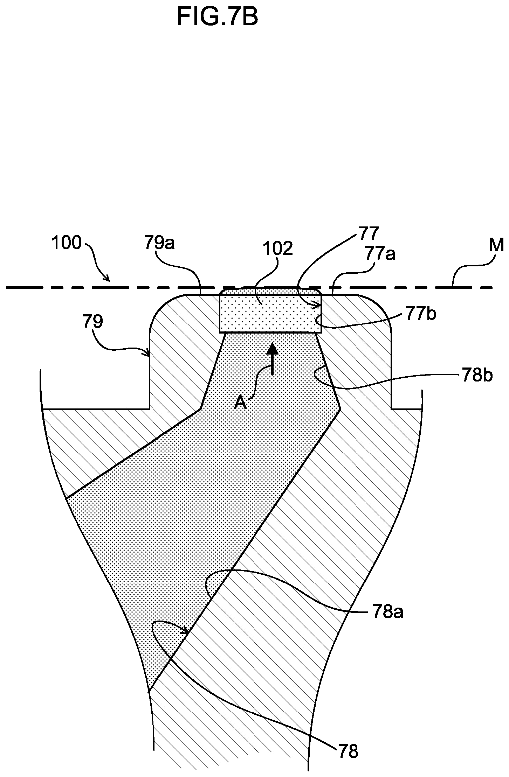

In the manufacturing apparatus 30, the application head 100 shown in Figs. 7A and 7B may be used instead of the application head 76 described above. In the application head 100, a pad 102 that holds adhesive is disposed inside the discharge port 77. The surface of the pad 102 is preferably flush with the top surface 79a of the protrusion 79, or protrudes slightly from the top surface 79a. Since the adhesive rises from the surface of the pad 102, the adhesive can be applied to the strip-shaped steel sheet M in a state in which a gap exists between the strip-shaped steel sheet M and the pad 102. By disposing the pad 102 inside the discharge port 77 in this manner, it becomes easier to apply the appropriate amount of adhesive to the strip-shaped steel sheet M.

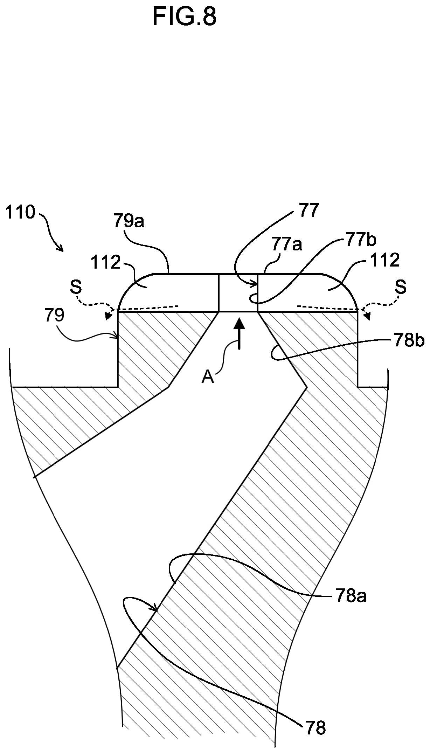

In the manufacturing apparatus 30, the application head 110 shown in Fig. 8 may be used instead of the application head 76 described above. The application head 110 has a notch 112 (for example, a slit) formed on the top surface 79a of the protrusion 79 so as to cut across the discharge port 77. Specifically, the notch 112 cuts across the discharge port 77 in a radial direction of the protrusion 79. By forming this notch 112, excess adhesive S can be released through the notch 112 toward a radial direction inner side or outer side of the protrusion 79. This makes it easier to apply the appropriate amount of adhesive to the strip-shaped steel sheet M.

The application head 76 may be formed by assembling plural parts. By configuring the application head 76 as an assembling type in this way, it is possible to replace only clogged or deteriorated parts. Further, by configuring the upper surface and lower surface of the inner wall surface 78a of the storage part 78 from separate members and applying enamel treatment, DLC (diamond-like carbon) treatment, or resin coating (resin application, insert molding) to the upper and lower surfaces of these separate components of the storage part 78, it becomes possible to form the base bodies of the separate components from metal materials.

In the manufacturing apparatus 30, adhesive is applied to the lower surface of the strip-shaped steel sheet M by the adhesive application part 70; however, the present disclosure is not limited to this configuration. For example, the adhesive application part 70 may be provided at the lower surface of the movable mold 92, and the adhesive may be applied to the upper surface of the strip-shaped steel sheet M.

While one embodiment of the present disclosure has been explained above, the present disclosure is not limited to the foregoing description, and it is, of course, the case that various modifications can be implemented in addition to the foregoing within a range that does not depart from the gist of the invention.

The following supplementary notes are further disclosed regarding the foregoing embodiment.

### <Supplementary Note 1>

[1] A laminated core manufacturing apparatus, including:
   an upper mold and a lower mold that press and punch out a core sheet from a strip-shaped steel sheet that is fed downstream;
   a lamination part that is provided at the lower mold and that bonds with an adhesive, and laminates, the punched-out core sheet; and
   an application part that is provided further toward an upstream side of the lower mold or the upper mold than the lamination part in a feeding direction of the strip-shaped steel sheet, and that applies the adhesive to one surface of the strip-shaped steel sheet,
   in which the application part has plural discharge ports that discharge the adhesive, and portions configuring the respective discharge ports are configured by a non-metallic material.
[2] The laminated core manufacturing apparatus of [1], in which:
   the application part has a storage part that stores the adhesive, which is supplied from an external part, and
   the adhesive is sent from the storage part to each of the discharge ports.
[3] The laminated core manufacturing apparatus of [2], in which a portion configuring the storage part in the application part is configured by the non-metallic material.
[4] The laminated core manufacturing apparatus of [1], in which an entirety of the application part is configured by the non-metallic material.
[5] The laminated core manufacturing apparatus of [1], in which a pad soaked with the adhesive is disposed inside each of the discharge ports.
[6] The laminated core manufacturing apparatus of [1], in which the non-metallic material is a resin material.
[7] The laminated core manufacturing apparatus of [6], in which the resin material is polyacetal resin, polyethylene resin, polypropylene resin, polyether ether ketone resin, or polytetrafluoroethylene resin.
[8] A method of manufacturing a laminated core, the method including:
   feeding a strip-shaped steel sheet toward an upper mold and a lower mold that press the strip-shaped steel sheet and punch out a core sheet;
   discharging an adhesive from plural discharge ports configured by a non-metallic material and included in an application part provided at the lower mold or the upper mold, and applying the adhesive to one surface of the strip-shaped steel sheet; and
   laminating the core sheet, which has been punched out from the strip-shaped steel sheet by pressing by the upper mold and the lower mold, while bonding the core sheet with the adhesive.

### <Supplementary Note 2>

[[1]] A laminated core manufacturing apparatus, including:
   an upper mold and a lower mold that press and punch out a core sheet from a strip-shaped steel sheet that is fed downstream;
   a lamination part that is provided at the lower mold and that bonds with an adhesive, and laminates, the punched-out core sheet; and
   an application part that is provided further toward an upstream side of the lower mold or the upper mold than the lamination part in a feeding direction of the strip-shaped steel sheet, and that applies the adhesive to one surface of the strip-shaped steel sheet,
   in which the application part has plural discharge ports that continuously discharge the adhesive, and portions configuring the respective discharge ports are configured by a non-metallic material.
[[2]] The laminated core manufacturing apparatus of [[1]], in which:
   the application part has a storage part that stores the adhesive, which is supplied from an external part, and
   the adhesive is sent from the storage part to each of the discharge ports.
[[3]] The laminated core manufacturing apparatus of [[2]], in which a portion configuring the storage part in the application part is configured by the non-metallic material.
[[4]] The laminated core manufacturing apparatus of any one of [[1]] to [[3]], in which an entirety of the application part is configured by the non-metallic material.
[[5]] The laminated core manufacturing apparatus of any one of [[1]] to [[4]], in which a pad that holds the adhesive is disposed inside each of the discharge ports.
[[6]] The laminated core manufacturing apparatus of any one of [[1]] to [[5]], in which the non-metallic material is a resin material.
[[7]] The laminated core manufacturing apparatus of [[6]], in which the resin material is polyacetal resin, polyethylene resin, polypropylene resin, polyether ether ketone resin, or polytetrafluoroethylene resin.
[[8]] The laminated core manufacturing apparatus of any one of [[1]] to [[7]], in which:
   the application part has an application head that is provided with an annular protrusion, and
   each of the discharge ports is provided at a top part of the protrusion.
[[9]] A method of manufacturing a laminated core, the method including:
   feeding a strip-shaped steel sheet toward an upper mold and a lower mold that press the strip-shaped steel sheet and punch out a core sheet;
   continuously discharging an adhesive from a plurality of discharge ports that are configured by a non-metallic material and that are included in an application part provided at the lower mold or the upper mold, and applying the adhesive to one surface of the strip-shaped steel sheet; and
   laminating the core sheet, which has been punched out from the strip-shaped steel sheet by pressing by the upper mold and the lower mold, while bonding the core sheet with the adhesive.

Further, the disclosure of Japanese Patent Application No. 2023-195401 filed on November 16, 2023, is incorporated herein by reference in its entirety.

All publications, patent applications and technical standards mentioned herein are incorporated herein by reference to the same extent as if each individual publication, patent application and technical standard were specifically and individually indicated to be incorporated by reference.

### Description of Reference Numerals

- 20: LAMINATED CORE
- 22: CORE SHEET
- 30: MANUFACTURING APPARATUS
- 40: FEEDER
- 50: OIL APPLICATION PART
- 60: PRESSING PART
- 62: FIRST PUNCHING PART
- 64: SECOND PUNCHING PART
- 70: ADHESIVE APPLICATION PART
- 72: ADHESIVE SUPPLY DEVICE
- 74: SUPPLY CHANNEL
- 76: APPLICATION HEAD
- 80: LAMINATION PART
- 90: FIXED MOLD
- 92: MOVABLE MOLD
- 100: APPLICATION HEAD
- 102: PAD
- 110: APPLICATION HEAD
- 112: NOTCH
- F: HOOP MATERIAL
- M: STRIP-SHAPED STEEL SHEET

## Claims

1. A laminated core manufacturing apparatus, comprising:
an upper mold and a lower mold that press and punch out a core sheet from a strip-shaped steel sheet that is fed downstream;
a lamination part that is provided at the lower mold and that bonds with an adhesive, and laminates, the punched-out core sheet; and
an application part that is provided further toward an upstream side of the lower mold or the upper mold than the lamination part in a feeding direction of the strip-shaped steel sheet, and that applies the adhesive to one surface of the strip-shaped steel sheet,
wherein the application part has a plurality of discharge ports that continuously discharge the adhesive, and portions configuring the respective discharge ports are configured by a non-metallic material.

2. The laminated core manufacturing apparatus of claim 1, wherein:
the application part has a storage part that stores the adhesive, which is supplied from an external part, and
the adhesive is sent from the storage part to each of the discharge ports.

3. The laminated core manufacturing apparatus of claim 2, wherein a portion configuring the storage part in the application part is configured by the non-metallic material.

4. The laminated core manufacturing apparatus of any one of claim 1 to claim 3, wherein an entirety of the application part is configured by the non-metallic material.

5. The laminated core manufacturing apparatus of any one of claim 1 to claim 4, wherein a pad that holds the adhesive is disposed inside each of the discharge ports.

6. The laminated core manufacturing apparatus of any one of claim 1 to claim 5, wherein the non-metallic material is a resin material.

7. The laminated core manufacturing apparatus of claim 6, wherein the resin material is polyacetal resin, polyethylene resin, polypropylene resin, polyether ether ketone resin, or polytetrafluoroethylene resin.

8. The laminated core manufacturing apparatus of any one of claim 1 to claim 7, wherein:
the application part has an application head that is provided with an annular protrusion, and
each of the discharge ports is provided at a top part of the protrusion.

9. A method of manufacturing a laminated core, the method comprising:
feeding a strip-shaped steel sheet toward an upper mold and a lower mold that press the strip-shaped steel sheet and punch out a core sheet;
continuously discharging an adhesive from a plurality of discharge ports that are configured by a non-metallic material and that are included in an application part provided at the lower mold or the upper mold, and applying the adhesive to one surface of the strip-shaped steel sheet; and
laminating the core sheet, which has been punched out from the strip-shaped steel sheet by pressing by the upper mold and the lower mold, while bonding the core sheet with the adhesive.
